# EUROPEAN PATENT APPLICATION

(11) **EP 3 026 569 A1**
(43) Date of publication of application: **01.06.2016**
(21) Application number: 14306916.9
(22) Date of filing: 28.11.2014
(51) Int. Cl.: G06F 13/42

(54) **A communication system with a frame based communication interface**

(71) Applicant: GEMALTO SA, 92190 Meudon (FR)
(72) Inventor: Tan, Theresa Joy, 92190 Meudon (FR); Durand, Stephane, 92190 Meudon (FR)
(74) Representative: Delaval, Guillaume Laurent

(57) **Abstract**

The invention concerns a system implementing a serial peripheral interface for full-duplex data transfer comprising a master device (100) and at least one slave device (101) connected together by a set of wired connections (102), a first wired connection (MOSI) being configured to transmit data from the master device (100) to the slave device (101), a second wired connection (MISO) being configured to transmit data from the slave device (101) to the master device (100). Data are transmitted on said first and second wired connections (MOSI, MISO) using a frame based transmission scheme working at a predefined frame rate, a frame being of constant size and composed of a payload and of a header indicating the size of valid data in the payload.

## Description

### TECHNICAL FIELD

The present invention relates to a communication system comprising a frame based serial peripheral interface.

### BACKGROUND OF THE INVENTION

A serial interface is an interface wherein information is transferred one bit at a time from a first device toward a second device. A serial interface can implement simplex, half-duplex or full-duplex communications.

The Single Wire Protocol (SWP) as defined in the international standard ETSI TS 102 613 v 9.3.0 is an example of full-duplex communication protocol between a smart card and a host device. This protocol operates in master/slave mode, the smart card being the slave. This protocol is implemented thanks to a single wired connection dedicated to data. The voltage is controlled by the master and the intensity by the slave allowing both master and slave to communicate at the same time.

Another example of existing protocol is the standard de facto called Serial Peripheral Interface (SPI). This protocol also operates in master/slave mode.

The serial peripheral interface is a four wire 102 synchronous interface that enables connection between a single master device 100 and at least one slave device 101.

The four logic signals carried by the four wired connections are:
- CS (Chip Select), which is generated by the master device 100;
- CLK (Clock), which is the system CLK generated by the master device 100;
- MOSI (Master Output, Slave Input), which is used to transmit data from the master device 100 to the slave device 101;
- MISO (Master Input, Slave Output), which is used to transmit data from the slave device 101 to the master device 100.

For easing the reading of the following description, the expression "CS line" refers to the wired connection configured to carry the CS signal. Similarly, the expression "CLK line" refers to the wired connection configured to carry the CLK signal, the expression "MOSI line" refers to the wired connection carrying the MOSI signal and the expression "MISO line" refers to the wired connection carrying the MISO signal.

In a serial peripheral interface, data transfer occurs on MISO and MOSI lines when a master device 100 selects a slave device 101 via the CS line and starts generating the clock via the CLK line. As a convention and for illustration purpose only, it is considered in this description that the MISO and MOSI signals are digital signals having two states.

Additionally, a signal is considered as activated when it switches from the passive state to the active state and a signal is considered as deactivated when it switches from the active state to the passive state.

For exchanging data with a slave, the master device 100 selects a slave device 101 by activating the CS signal at a time T_act.

At the same time, the CLK signal is generated and data can be exchanged 200, 201 on the MISO and MOSI lines.

One problem to be solved with an interface of SPI type concerns the discrimination between valid and invalid data. In this description, valid data refers to data carrying information whereas invalid data refers to data carrying no information.

In particular, a slave device may have to transmit data at a data rate which is lower than the one provided on the MISO line. In that case, as the data transmission is synchronized with the clock signal CLK generated by the master device, valid data 301 and invalid data 302 may be transmitted together on the same line.

Similarly, a master device may have to transmit data at a data rate which is lower than the one provided on the MOSI line. In that case, as the data transmission is synchronized with the clock signal CLK, valid data and invalid data may be transmitted together on the same line.

Further, the slave device may be busy when the master initiates the communication, which may also result into transmitting invalid data.

An existing solution is to use byte patterns to represent invalid data like. For example, a pattern like 0xFF or 0x00 can be used. The drawback of this solution is that additional processing such as filling and parsing per byte are required. Further, additional processing are required to take into account a situation in which portion of valid data is identical to the pattern used to represent invalid data. Another drawback is that at the reception side, one has to read every received byte in order to indentify an invalid data pattern from valid data.

Therefore, there is a need to improve the system and devices implementing a serial peripheral interface in order to discriminate valid data from invalid data.

### SUMMARY OF THE INVENTION

This invention relates to a system implementing a serial peripheral interface for full-duplex data transfer comprising a master device and at least one slave device connected together by a set of wired connections, a first wired connection being configured to transmit data from the master device to the slave device, a second wired connection being configured to transmit data from the slave device to the master device, wherein data are transmitted on said first and second wired connections using a frame based transmission scheme working at a predefined frame rate, a frame being of constant size and composed of a payload and of a header indicating the size of valid data in the payload.

In one embodiment, the header is set to a predefined value when the payload of said given frame comprises invalid data only.

In one embodiment, the master device is configured to trigger data exchanges with the slave devices by generating a clock signal at a time instant t_start, the frame rate on the a first wired connection and the frame rate on the second wired connection being synchronized with t_start.

This invention also relates to a master device implementing a serial peripheral interface for full-duplex data transfer configured to exchange data with at least one slave device when connected together by a set of wired connections, wherein said master device is further configured to send to the slave device using a first wired connection and to receive data from the slave device using a second wired connection, data being exchanged using a frame based transmission scheme working at a predefined frame rate, a frame being of constant size and composed of a payload and of a header indicating the size of valid data in the payload.

In one embodiment, the header is set to a predefined value when the payload of said given frame comprises invalid data only.

In one embodiment, the master device is configured to trigger data exchanges with the slave device by generating a clock signal at a time instant t_start, the frame rate on the a first wired connection and the frame rate on the second wired connection being synchronized with t_start.

The invention also relates to a slave device implementing a serial peripheral interface for full-duplex data transfer configured to exchange data with a master device when connected together by a set of wired connections, wherein said slave device is further configured to send to the master device using a first wired connection and to receive data from the master device using a second wired connection, data being exchanged using a frame based transmission scheme working at a predefined frame rate, a frame being of constant size and composed of a payload and of a header indicating the size of valid data contained in the payload.

In one embodiment, the header is set to a predefined value when the payload of said given frame comprises invalid data only.

In one embodiment, the master device is configured to trigger data exchanges by generating a clock signal at a time instant t_start, the frame rate on the first wired connection and the frame rate on the second wired connection being synchronized with t_start.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:

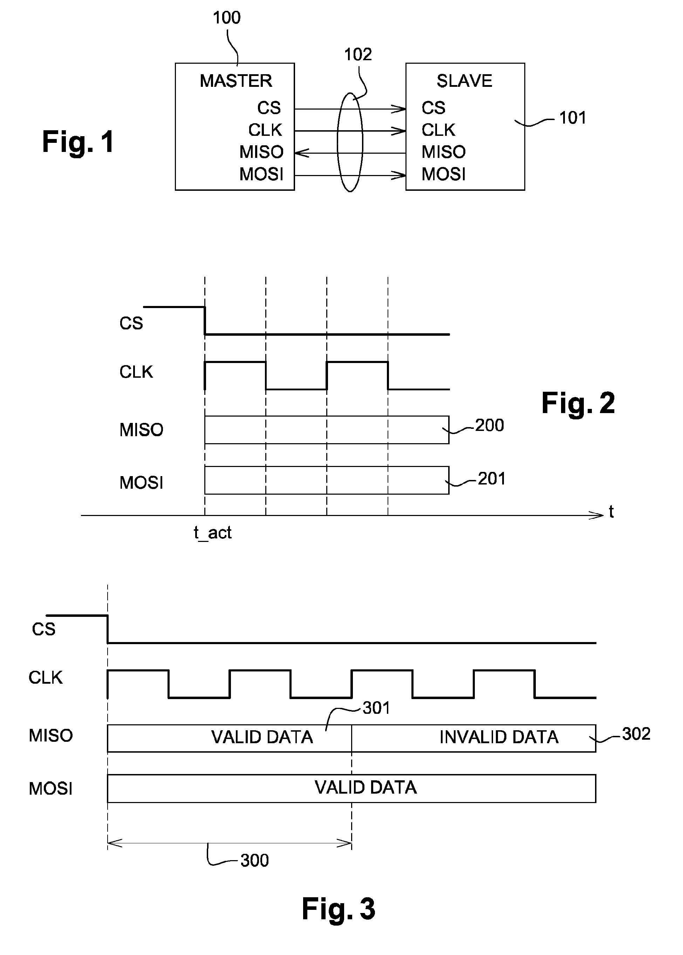

- Figure 1 represents the architecture of a serial peripheral interface;
- Figure 2 illustrates to functioning of a serial peripheral interface;
- Figure 3 gives an example of data exchange between a master device and a slave device in which invalid data are received by the master device together with valid data;
- Figure 4 is an example of frame that can be used by the invention wherein valid and invalid data are transmitted in its payload;
- Figure 5 is an example of frame that can be used by the invention wherein only invalid data are transmitted.

### DETAILED DESCRIPTION

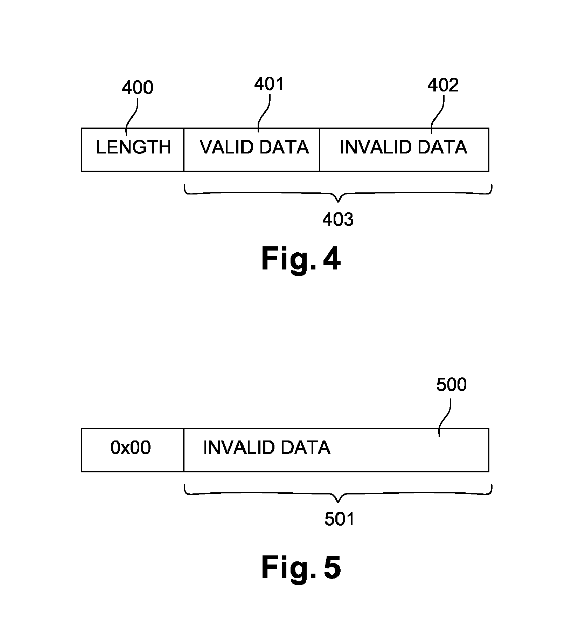

Figure 4 provides an example of frame structure used to improve data exchange over a serial peripheral interface.

A simultaneous frame-based transmission scheme is proposed to ensure that valid data, if any, can be extracted efficiently among invalid data.

According to the invention, the frames are of fixed size. A frame is composed of a header 400 and a payload 403.

The payload contains one or two portions of data depending of the configuration. When both valid and invalid data are transmitted in a frame, the payload 403 comprises a first portion 401 comprising the valid data and a second portion 402 containing the invalid data. When they are only valid data (resp. invalid data) in the frame, the payload comprises only one section with said valid data (resp. Invalid data).

The header 400 corresponds to a binary data, for example of 8 bits, representing the length of the portion of the payload containing the valid data. If the valid data is equal to less than the maximum length of data the packet can contain, the packet is padded with invalid data. This invalid data can be bits chosen randomly at the time of constructing the frame.

In a preferred embodiment, the frame rate is synchronized with the start of the clock signal. The clock signal CLK is generated by the master device 100 and triggers the exchange of data. If the clock signal is generated beginning from a time instant t_start, both slave and master devices generate their first frame aligned with t_start. In other words, this means that the first bit of the first emitted frame is transmitted at time t_start.

As the frames and their headers are of constant length, the header of a given frame is received at known time instant. Therefore, they can be read and analysed by said devices without further synchronisation operation. This makes the implementation of the proposed frame based transmission mechanism very simple.

Another advantage is that the devices which receive a frame (master or slave device) do not have to process invalid data contained in the frames. They just have to determine if there are any valid data in the frame by reading the headers and extract the valid data for higher layer processing.

Figure 5 provide an example of a frame with a payload containing only invalid data. In this example, one of the devices does not have any valid data to transmit for a given period of time. Frames are nevertheless transmitted with a payload 501 containing only invalid data. The header contains a header with eight bits set to zero meaning in this example that there is no valid data in the transmitted payload.

## Claims

1. A system implementing a serial peripheral interface for full-duplex data transfer comprising a master device (100) and at least one slave device (101) connected together by a set of wired connections (102), a first wired connection (MOSI) being configured to transmit data from the master device (100) to the slave device (101), a second wired connection (MISO) being configured to transmit data from the slave device (101) to the master device (100), wherein data are transmitted on said first and second wired connections (MOSI, MISO) using a frame based transmission scheme working at a predefined frame rate, a frame being of constant size and composed of a payload and of a header indicating the size of valid data in the payload.

2. A system according to claim 1, wherein the header is set to a predefined value when the payload of said given frame comprises invalid data only.

3. A system according to any of the preceding claims, wherein the master device is configured to trigger data exchanges with the slave devices by generating a clock signal (CLK) at a time instant t_start, the frame rate on the a first wired connection (MOSI) and the frame rate on the second wired connection (MISO) being synchronized with t_start.

4. A master device (100) implementing a serial peripheral interface for full-duplex data transfer configured to exchange data with at least one slave device (101) when connected together by a set of wired connections (102), wherein said master device (100) is further configured to send to the slave device (101) using a first wired connection (MOSI) and to receive data from the slave device (101) using a second wired connection (MISO), data being exchanged using a frame based transmission scheme working at a predefined frame rate, a frame being of constant size and composed of a payload and of a header indicating the size of valid data in the payload.

5. A master device (100) according to claim 3, wherein the header is set to a predefined value when the payload of said given frame comprises invalid data only.

6. A master device (100) according to any of claims 4 to 5 configured to trigger data exchanges with the slave device (101) by generating a clock signal (CLK) at a time instant t_start, the frame rate on the a first wired connection (MOSI) and the frame rate on the second wired connection (MISO) being synchronized with t_start.

7. A slave device (101) implementing a serial peripheral interface for full-duplex data transfer configured to exchange data with a master device (100) when connected together by a set of wired connections (102), wherein said slave device (100) is further configured to send to the master device (100) using a first wired connection (MISO) and to receive data from the master device (100) using a second wired connection (MOSI), data being exchanged using a frame based transmission scheme working at a predefined frame rate, a frame being of constant size and composed of a payload and of a header indicating the size of valid data contained in the payload.

8. A slave device (101) according to claim 5, wherein the header is set to a predefined value when the payload of said given frame comprises invalid data only.

9. A slave device (101) according to any of claims 7 to 8, wherein the master device (100) is configured to trigger data exchanges by generating a clock signal (CLK) at a time instant t_start, the frame rate on the first wired connection (MOSI) and the frame rate on the second wired connection (MISO) being synchronized with t_start.
